# EUROPEAN PATENT APPLICATION

(11) **EP 1 496 378 A1**
(43) Date of publication of application: **12.01.2005**
(21) Application number: 04253980.9
(22) Date of filing: 01.07.2004
(51) Int. Cl.: G02B 6/13

(54) **Optical coupling device**

(30) Priority: 10.07.2003 GB 0316118
(71) Applicant: C.S.E.M. CENTRE SUISSE D'ELECTRONIQUE ET DE MICROTECHNIQUE SA, 2007 Neuchâtel (CH)
(72) Inventor: Gale, Michael Thomas, 8907 Wettwsil (CH); Sochtig, Jurgen, 8152 Glattbrugg (CH); Urban, Claus, 8600 Dubendorf (CH)
(74) Representative: Andrews, Arthur Stanley

(57) **Abstract**

Traditional high-speed computer systems are often built using a backplane assembly. Several daughter boards are interconnected through a backplane, which routes signals between the connectors for the daughter boards. Traditional backplane technology's bases on electrical signal conductors. Due to steadily increasing processor speed signal transmission via electrical conductors has become a bottleneck in high-speed computing since electrical transmission rates are limited to about 2.5 GHz max. A solution is seen in the optical signal transmission, which achieves much higher transmission rates in the THz range. This invention discloses the fabrication of surface relief structures (120) for optical coupling of guided waves by replication, for example by U.V. moulding, on top of waveguides (110). Due to the replication on the surface of the waveguide, the waveguide's core layer can be left intact; no opening of the waveguide's core layer, as required for mirror or prism couplers, is required.

## Description

### Field of the invention

The invention relates to surface relief microstructures and their fabrication.

Such microstructures may be used for optical coupling and a particular, but not exclusive, application of the invention is to the replication of surface relief microstructures for coupling guided optical waves into and out of optical backplanes.

Communication and computation systems based on electronic interconnection schemes are reaching their limit due to restricted data transfer rates. Data transmission by optical means offers a much higher bandwidth compared to electronic interconnections. Optical data transmission can be performed in a similar way to electronic data transmission by sending the optical data through waveguides or optical fibres, the counterpart to the electronic conductors, from the light source to the detector. While this is well established for medium or long distance transfer, such as local area networks (LAN) or wide area networks (WAN), for short distances of the order of one metre as for example in backplanes data transfer is still normally by means of electrical conductors. Traditional high-speed computer systems are often built using a backplane assembly. Several daughter boards are interconnected through a backplane or mother board, which routes signals between the connectors of the daughter boards. Traditional backplane technology is based on electrical signals. Due to steadily increasing processor speed signal transmission via electrical conductors is seen to become a bottleneck in high-speed computing since electrical transmission rates are limited to frequencies below about 2.5 GHz. A solution is seen in the optical signal transmission, which may achieve a much higher transmission rates in the THz range.

Optical interconnects used in optoelectronic backplanes usually consist of fibre bundles between the daughter boards, which are normally mounted perpendicular to the backplane. Due to the requirements in space resulting from the limited bending radius of the fibres and the fibre connectors the number of optical data channels is limited when using optical fibres in optoelectronic backplanes. The implementation of optical layers including waveguides as paths for high-speed data transfer in backplanes offers substantial advantages compared to the use of fibre bundles. Removing the failure sensitive fibre connection between the daughter boards and replacing it by the embedded optical layer increase the reliability of the backplane.

Crucial for the optical backplane technology or for direct connection of lasers and detectors to a board with an optical layer is the efficient in-coupling and out-coupling of light signals to respectively from the waveguides in the backplane. Couplers must provide for a nearly 90 degree bending of the light beams travelling from one daughter board through the optical backplane layer to another daughter board to guarantee light propagation by total internal reflection in the waveguides of the backplane. Among the coupler structures that have been suggested for this task are:
- Volume gratings or surface relief gratings,
- Two and three dimensional tapered waveguides,
- Prisms or mirrors.

All these couplers have their advantages, but a termination of waveguides through access holes through the optical core layer of the waveguides is often necessary, as for the application of prisms or mirrors. Alternatively, the waveguide itself is modified, for example in-waveguide volume gratings or tapered waveguides.

The invention provides a method of fabricating an optical coupling device on a surface of an optical waveguide comprising forming a surface relief structure having appropriate optical properties on a surface of the waveguide using a replication technique.

This enables a cost efficient method of fabricating optical coupling devices as surface relief structures on the core layers of an optical waveguide.

The invention further provides a method of forming an optical backplane comprising the steps of;
embedding one or more optical waveguides in a substrate, and
forming a plurality of optical coupling devices on the waveguide(s) by a method according to the invention.

The invention still further provides a mother board for interconnecting a plurality of daughter boards comprising a substrate carrying one or more optical waveguides, at least one of the optical waveguides being provided with one or more coupling devices, at least one of the optical coupling devices being formed by a method according to the invention.

The present invention provides a process for the fabrication of surface relief optical couplers for coupling optical signals into and out of optical waveguides. The present invention can be used for the cost efficient fabrication of optical couplers on optical layers with readily manufactured waveguide cores used for optical backplanes, or for direct coupling of lasers or detectors to boards with optical layers containing multimode or singlemode stripe waveguide cores. The coupler fabrication is preferably done before the optical layer is coated with a cladding, as access to the waveguide core is needed. Optical layers may then be cladded after the coupler fabrication step.

The present invention encompasses many replication techniques. Moulding using UV-curable materials is a convenient method but hot embossing or any other replication technique for the fabrication of micro-optical structures may be used. Optical couplers can be of any surface relief structure capable of coupling light into and out of waveguides when placed on a surface of the waveguide's core. Examples of such structures are surface relief gratings and three-dimensional tapers. In one example of the present invention a replication technique is described for a three-dimensional taper having a specific refractive index and adiabatically transmitting light from a light source to a waveguide core and from a waveguide core to a light-receiving element. The direction of the coupled light beam and the waveguide include a predefined angle, which is preferably 90 degree. The surface relief structure can be configured to include optical beam shaping and/or focusing.

In one embodiment UV-curable sol-gel- or polymer-material is dispensed at positions where couplers are to be fabricated. Using a moulding tool having a cavity with the shape of the required surface relief structure, in the example a taper, the sol-gel material is formed into the taper profile and subsequently hardened by UV-light. The moulding tool can include a mask for UV-light enabling an additionally horizontal structuring of the sol-gel material by partial UV-curing the material below the transparent parts of the moulding tool only.

The embodiment described in the preceding paragraph improves on the state-of-the-art in the following ways. First, the surface relief structures can be cost efficiently fabricated on top of already manufactured waveguide's core layers without the need of opening or reprocessing the waveguide's cores. Secondly, the use of the UV-moulding technology is compatible with standard backplane process technology. Optical couplers may be fabricated on top of the optical layer containing the waveguide's cores, which makes waveguide processing easier compared with coupling structures in the waveguides.

The above and other features and advantages of the invention will be apparent from the following description, by way of example, of embodiments of the invention with reference to the accompanying drawings, in which:-
Figure 1 shows schematically an optical backplane optical input coupler according to an embodiment of the present invention,
Figure 2 shows an optical input coupler according to an embodiment of the present invention,
Figure 3 shows an optical output coupler according to an embodiment of the present invention,
Figure 4 shows an optical layer containing waveguides and optical couplers according to an embodiment of the present invention, and
Figure 5 shows a UV-moulding replication process of an optical coupler according to an embodiment of the present invention.

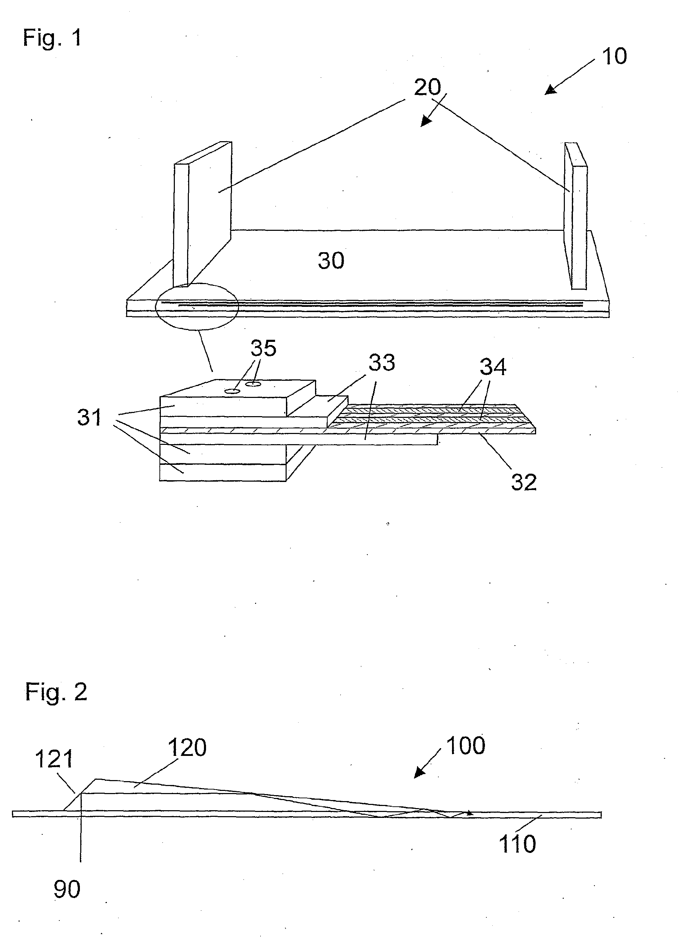

Figure 1 shows an optical backplane assembly 10 comprising a mother board 30 and a plurality of daughter boards 20.

The mother board 30 contains one or more optical layers 32 for high-speed data transmission embedded in electrical backplane layers 31. Optical waveguide structures 34 covered with a cladding 33 guide the optical signals between the connectors for the daughter boards with coupling structures used for coupling the optical signals into to or out of waveguides 34.

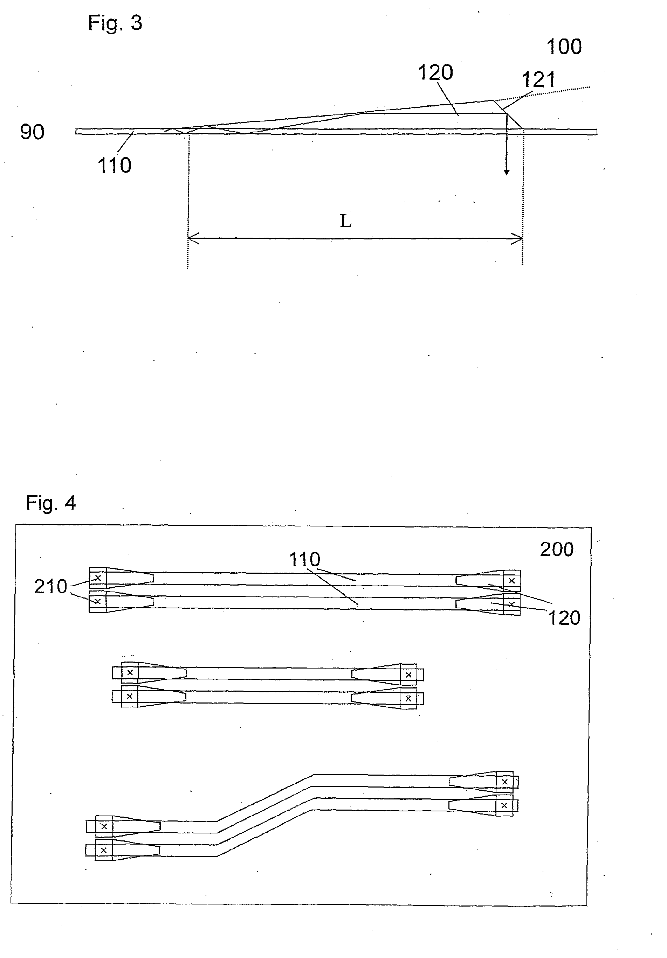

Figure 2 shows a optical coupler 100 according to an embodiment of the present invention. In general an optical coupler 100 comprises an optical waveguide 110 with a surface relief structure 120 on top. Surface relief structure 120 can be any type of structure capable of coupling light into or out of waveguides, which can be fabricated on top of the waveguide's cores by a replication technique. As an example a taper coupler is shown in the drawings. A segment of the taper 121 reflects the beam from the light source 90 under 90 degrees into the tapered structure in direction of the waveguide's core where it undergoes reflection at the surface of the taper and the bottom surface of the waveguide 110. This coupler is termed as an input coupler. Conversely, a coupler, which couples light from a waveguide as shown in Figure 3 is termed output coupler. Coupling efficiency depends on the slope angle α and the length L of the taper and can be up to 100%. A tuning of the surface profile and the length of couplers enables the coupling efficiency to be defined allowing for example signal distribution from waveguides. Taper 120 in Figures 2 and 3 is drawn as a linear taper. The surface profile of taper 120 may, however, include optical features as for example the beam bending segment 121 can be made as focusing mirror. Furthermore a non-linear taper profile can be used to reduce the taper length L.

Optical coupling structures may be replicated on top of the core layers of existing optical waveguides 110 which can be part of an optical layer 200 of an optical backplane as shown in Figure 4. Optical input- and output-couplers 120 may be automatically fabricated, for example by UV-moulding at predefined positions 210 using a multi-axis robot, such as a pick-and-place robot.

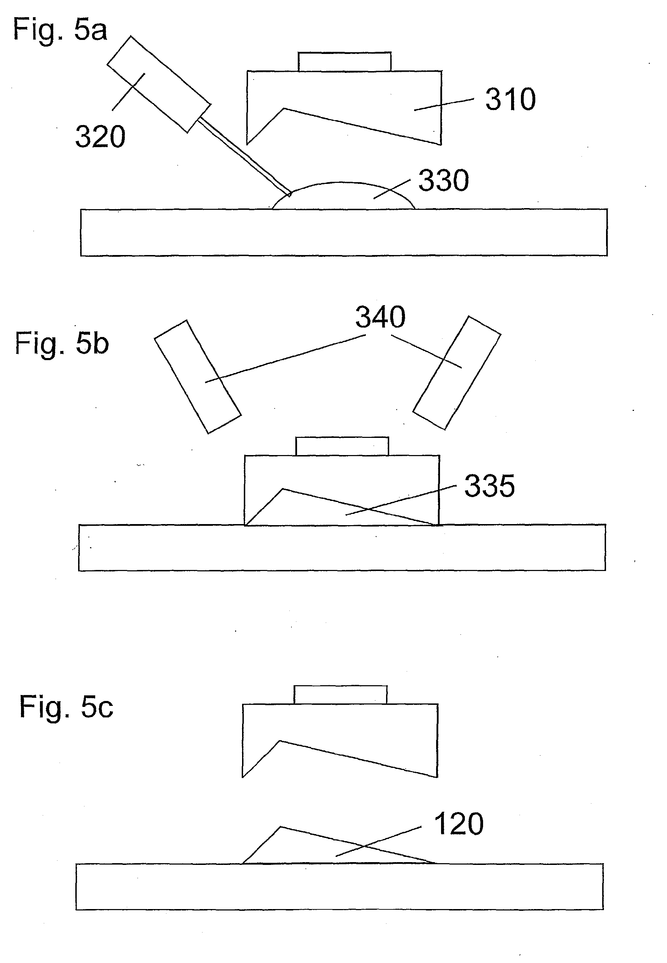

The UV-moulding process is shown in Figure 5 and comprises the following steps:
- A three-dimensional structure called stamper 310, representing the surface profile of the taper 120 to be replicated is mounted onto a robot and positioned above the waveguide's core (Figure 5a). With a dispenser 320 an amount of liquid UV-curable material 330 (e.g. Ormocer B59, Fraunhofer Institute in Freiburg, Germany) enough to fill the stamper structure is dispensed onto the surface of the waveguide or directly onto the stamper 310.
- The stamper then is lowered onto the surface of the waveguide core 110 (Figure 5b) and with all functional faces of the stamper in contact with the liquid material 330 the shape of the taper 335 is formed. The liquid material then is pre-cured with light from a UV-light sources 340.
- The stamper can be removed from the now solid taper structure (Figure 5c).
- Further tapers can be replicated at different positions on the optical layer in the same way.
   Alternatively arrays of tapers can be replicated in the same way.
- The taper couplers can be metallized to enhance reflection of the surfaces.

A subsequent thermal curing,of the pre-cured taper couplers may be needed. This can be combined with the thermal curing of the cladding, with which the optical layer will usually be coated, or with other thermal treatments in the backplane production process. The cladding layer can also cover the taper couplers to enhance mechanical stability of the optical layer.

As can be seen from the preceding description one aspect of the invention provides a method for the fabrication of surface relief structures for optical coupling of guided waves atop of the cores of already manufactured waveguides using replication techniques.

The fabrication technique may be UV-moulding.

The optical coupling device may be a linear taper.

Alternatively, the optical coupling device may be a surface relief grating.

The optical coupler may be any surface relief structure capable of coupling of light into and/or out of waveguides.

The surface relief structure may provide a surface profile featuring beam shaping and/or focusing.

The surface relief profile may be optimised for coupling efficiency and coupler length.

More than one optical coupling device may be arranged in an array.

Other suitable UV-curable materials than Ormocer B59 may be used.

Other replication techniques for the fabrication of surface relief structures other than UV-moulding may used.

Examples of some of the other replication techniques that may be used are given in Chapter 6 of Micro Optics: Elements, systems and applications, Edited by N. P. Herzig, published by Taylor and Francis, London, 1997, ISBN 078404813HB, the contents of which are hereby incorporated by reference.

The following documents, which are hereby incorporated by reference, provide an indication of the background state of the art.

Optical backplane and method of making same, patent no.: WO 02/31567 A2, April 18, 2002

Diffractive grating coupler and method, patent no.: US 6,285,813 B1, Sep. 4, 2001

Compression-moulded three-dimensional tapered waveguide couplers, patent no.: US 6470117, Oct. 22, 2002

Optical coupling arrangement, patent no.: WO 02/084348 A1, Oct. 24, 2002

## Claims

1. A method of fabricating an optical coupling device on a surface of an optical waveguide comprising forming a surface relief structure having appropriate optical properties on a surface of the waveguide using a replication technique.

2. A method as claimed in Claim 1 in which the replication technique comprises moulding a UV-curable material on a surface of the waveguide and curing the moulded material.

3. A method as claimed in Claim 1 or Claim 2 in which the optical coupling device is a linear taper.

4. A method as claimed in Claim 1 or Claim 2 in which the optical coupling device is a surface relief grating.

5. A method as claimed in any preceding Claim in which the optical coupling device further comprises a surface profile providing a beam shaping and/or focussing function.

6. A method as claimed in any preceding Claim in which the surface relief profile is optimised for coupling efficiency and/or coupling device length.

7. A method as claimed in any preceding Claim in which a plurality of coupling devices are formed on the waveguide.

8. A method as claimed in any preceding Claim in which the replication technique is performed at a plurality of locations on one or more waveguides using a multi-axis robot.

9. A method of forming an optical backplane comprising the steps of;
embedding one or more optical waveguides in a substrate,
and forming a plurality of optical coupling devices on the waveguide(s) by a method as claimed in any preceding Claim.

10. A method as claimed in Claim 9 comprising the further step of cladding the optical waveguide(s) with a protective layer.

11. A mother board for interconnecting a plurality of daughter boards comprising a substrate carrying one or more optical waveguides, at least one of the optical waveguides being provided with one or more optical coupling devices, at least one of the optical coupling devices being formed by a method as claimed in any of Claims 1 to 8.
